# EUROPEAN PATENT APPLICATION

(11) **EP 3 744 558 A1**
(43) Date of publication of application: **02.12.2020**
(21) Application number: 20757509.3
(22) Date of filing: 25.02.2020
(51) Int. Cl.: B60L 5/20, B60L 5/18

(54) **MULTIPLE-UNIT TRAIN AND PANTOGRAPH PLATFORM STRUCTURE THEREOF**

(30) Priority: 26.02.2019 CN 201910142021; 26.02.2019 CN 201920243939 U
(71) Applicant: CRRC Changchun Railway Vehicles Co., Ltd., Changchun, Jilin 130000 (CN)
(72) Inventor: WANG, Chengqiang, Changchun, Jilin 130000 (CN); ZHAO, Hui, Changchun, Jilin 130000 (CN); LIU, Zhengwei, Changchun, Jilin 130000 (CN); LI, Lin, Changchun, Jilin 130000 (CN); WANG, Lizhong, Changchun, Jilin 130000 (CN)
(74) Representative: Herrmann, Uwe
(86) International application number: PCT/CN2020/076620
(87) International publication number: WO 2020/173435

(57) **Abstract**

A motor train unit and a pantograph platform structure thereof are provided. The pantograph platform structure includes: a train body structure, a high-voltage box (4) and a pantograph guide guard (1). The train body structure has a sunken flat roof structure (3); the high-voltage box (4) is provided on the flat roof structure (3) and is configured to accommodate a high-voltage electrical apparatus, wherein, the high-voltage box (4) is accommodated on the flat roof structure (3), and a top surface contour of the high-voltage box (4) is aligned with a top surface outer contour of a train body structure; and the pantograph guide guard (1) is provided on the flat roof structure (3), wherein, the pantograph guide guard (1) has an avoidance portion for installing a pantograph, the pantograph guide guard (1) is accommodated on the flat roof structure (3), and a top surface contour of the guide guard (1) is aligned with the top surface outer contour of the train body structure. The pantograph platform structure according to the present application facilitates the installation and maintenance of the high-voltage box, reduces the aerodynamic resistance and the aerodynamic noise, and improves the aerodynamic performance.

## Description

This application claims the priority to Chinese Patent Application No. 201910142021.X, titled "MOTOR TRAIN UNIT AND PANTOGRAPH PLATFORM STRUCTURE THEREOF", filed with the China National Intellectual Property Administration on February 26, 2019, the entire disclosure of which is incorporated herein by reference.

This application claims the priority to Chinese Patent Application No. 201920243939.9, titled "MOTOR TRAIN UNIT AND PANTOGRAPH PLATFORM STRUCTURE THEREOF", filed with the China National Intellectual Property Administration on February 26, 2019, the entire disclosure of which is incorporated herein by reference.

### FIELD

The present application relates to the technical field of railway transportation equipment, and particularly to a motor train unit and a pantograph platform structure thereof.

### BACKGROUND

With the development of high-speed motor train units, people pay their attention on how to reduce the aerodynamic noise and the aerodynamic resistance at the pantograph of the high-speed motor train unit.

Many high-voltage components are provided on the flat roof of the conventional high-speed motor train unit. The exposure of the high-voltage components increases the aerodynamic noise and the aerodynamic resistance of the train. A few developed countries also use the high-voltage integration technology, but the train body structure is too complex and the installation is not convenient.

The problems of the pantograph platform of the conventional high-speed motor train unit are as follows: (1) the high-voltage components are accommodated independently on the flat roof, which is easy to cause fog flashover of the high-voltage components, and increases the aerodynamic noise and the aerodynamic resistance of the upper portion of the train; (2) a guide guard is provided around the high-voltage components, the guide guard has limited capability to reduce resistance and noise, and the shape of the guide guard needs to be optimized; (3) the size of the pantograph area protruding from the train body is too large, which affects the aerodynamic performance of the whole train.

Therefore, those skilled in the art have a strong desire to reduce the aerodynamic noise and the aerodynamic resistance and to improve the aerodynamic performance.

### SUMMARY

In view of this, a pantograph platform structure is provided according to the present application, so as to reduce the aerodynamic noise and the aerodynamic resistance and to improve the aerodynamic performance. A motor train unit is further disclosed according to the present application.

To achieve the above objects, the following technical solutions are provided according to the present application.

As can be seen from the above technical solutions, the pantograph platform structure according to the present application includes:
a train body structure having a sunken flat roof structure;
a high-voltage box provided on the flat roof structure and configured to accommodate a high-voltage electrical apparatus, where, the high-voltage box is accommodated on the flat roof structure, and a top surface contour of the high-voltage box is aligned with a top surface outer contour of the train body structure; and
a pantograph guide guard provided on the flat roof structure, where, the pantograph guide guard has an avoidance portion for installing a pantograph, the pantograph guide guard is accommodated on the flat roof structure, and a top surface contour of the guide guard is aligned with the top surface outer contour of the train body structure.

Preferably, in the pantograph platform structure, the high-voltage box is located in the avoidance portion of the pantograph guide guard.

Preferably, in the pantograph platform structure, the pantograph guide guard is a frame structure, and the avoidance portion is a hollow portion located in the middle of the frame structure.

Preferably, in the pantograph platform structure, the high-voltage box hermetically contacts with an inner wall of the frame structure.

Preferably, in the pantograph platform structure, the flat roof structure is provided with a groove; and
the high-voltage box is arranged in the groove.

Preferably, in the pantograph platform structure, an outer wall of the high-voltage box hermetically contacts with a side wall of the groove.

Preferably, in the pantograph platform structure, the flat roof structure is an aluminum alloy structure.

A motor train unit is further provided according to the embodiment of the present application, which includes a pantograph platform structure. The pantograph platform structure is the pantograph platform structure described in any one of the above.

According to the pantograph platform structure provided by the present application, a sunken flat roof structure is arranged on the train body structure, and the pantograph guide guard and the high-voltage box are accommodated on the flat roof structure, the top surface contours of the pantograph guide guard and the high-voltage box are aligned with the top surface outer contour of the train body structure, so that the pantograph guide guard and the high-voltage box form the same structure as the top surface outer contour (non-flat roof structure) of the train body structure after installation. Since the high-voltage box is directly accommodated on the flat roof structure, the installation and maintenance of the high-voltage box are convenient. The high-voltage electrical apparatus is accommodated in the high-voltage box, which solves the problem of the fog flashover of the high-voltage components, and reduces the aerodynamic resistance and the aerodynamic noise. The top surface contours of the pantograph guide guard and the high-voltage box are aligned with the top surface outer contour of the train body structure, which effectively improves the aerodynamic performance.

A motor train unit is further provided according to the present application. Since the motor train unit has the above pantograph platform structure, the above motor train unit has the same technical effect as the pantograph platform structure, which will not be described in detail here.

### BRIEF DESCRIPTION OF THE DRAWINGS

To illustrate technical schemes according to the embodiments of the present application or in the conventional technology more clearly, the drawings to be used in the description of the conventional technology or the embodiments are described briefly hereinafter. Apparently, the drawings described hereinafter are only some embodiments of the present application, and other drawings may be obtained by those skilled in the art based on those drawings without creative effort.
Figure 1 is a schematic view showing the structure of a pantograph platform structure according to an embodiment of the present application;
Figure 2 is a schematic view showing the structure of a high-voltage box according to the embodiment of the present application;

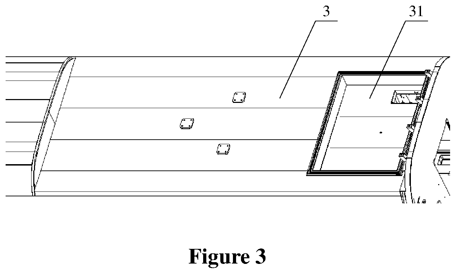

Figure 3 is a schematic view showing the structure of a flat roof structure according to the embodiment of the present application; and

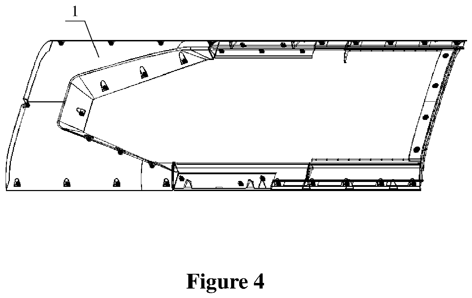

Figure 4 is a schematic view showing the structure of a pantograph guide guard according to the embodiment of the present application.

**Reference numerals:**

| | | | |
|---|---|---|---|
| 1 | pantograph guide guard, | 2 | pantograph, |
| 3 | flat roof structure, | 4 | high-voltage box |

### DETAILED DESCRIPTION OF THE EMBODIMENTS

A pantograph platform structure is disclosed according to the present application, so as to reduce the aerodynamic noise and the aerodynamic resistance and improve the aerodynamic performance. A motor train unit is further disclosed according to the present application.

Technical solutions of embodiments of the present application are clearly and completely described hereinafter in conjunction with the drawings of the embodiments of the present application. Apparently, the embodiments described in the following are only some embodiments of the present application, rather than all embodiments. Any other embodiments obtained by those skilled in the art based on the embodiments in the present application without any creative work fall in the scope of protection of the present application.

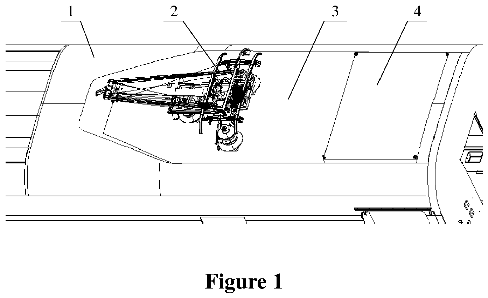

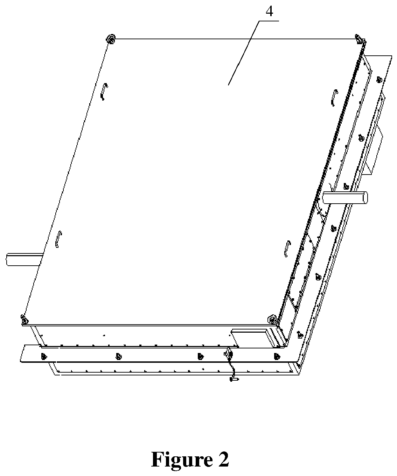

Referring to Figures 1 and 2, the pantograph platform structure according to the embodiment of the present application includes: a train body structure having a sunken flat roof structure 3; a high-voltage box 4 provided on the flat roof structure 3 and configured to accommodate a high-voltage electrical apparatus, where, the high-voltage box 4 is accommodated on the flat roof structure 3, and a top surface contour of the high-voltage box 4 is aligned with a top surface outer contour of the train body structure; and a pantograph guide guard 1 provided on the flat roof structure 3, where, the pantograph guide guard 1 has an avoidance portion for installing a pantograph, the pantograph guide guard 1 is accommodated on the flat roof structure 3, and a top surface contour of the guide guard 1 is aligned with the top surface outer contour of the train body structure.

According to the pantograph platform structure provided by the present application, the sunken flat roof structure 3 is arranged on the train body structure, and the pantograph guide guard 1 and the high-voltage box 4 are accommodated on the flat roof structure 3. The top surface contours of the pantograph guide guard 1 and the high-voltage box 4 are aligned with the top surface outer contour of the train body structure, so that the pantograph guide guard 1 and the high-voltage box 4 form the same structure as the top surface outer contour (non-flat roof structure 3) of the train body structure after installation. Since the high-voltage box 4 is directly accommodated on the flat roof structure 3, the installation and maintenance of the high-voltage box 4 are convenient. The high-voltage electrical apparatus is accommodated in the high-voltage box 4, which solves the problem of the fog flashover of the high-voltage components, and reduces the aerodynamic resistance and the aerodynamic noise. The top surface contours of the pantograph guide guard 1 and the high-voltage box 4 are aligned with the top surface outer contour of the train body structure, which effectively improves the aerodynamic performance.

In order to improve the structural compactness and the stability of the high-voltage box 4, the high-voltage box 4 is located in the avoidance portion of the pantograph guide guard 1.

In the present embodiment, the pantograph guide guard 1 is a frame structure, and the avoidance portion is a hollow portion located in the middle of the frame structure. Through the above arrangement, the processing of the pantograph guide guard 1 is effectively convenient, and the structural stability of the pantograph guide guard 1 is ensured.

Furthermore, the high-voltage box 4 hermetically contacts with an inner wall of the frame structure. Through the above arrangement, the protective effect of the pantograph guide guard 1 on the high-voltage box 4 is effectively ensured, so that the pantograph guide guard 1 ensures the rain-proof and snow-proof effect on the high-voltage box 4 on the basis of the guiding function.

The outer wall of the high-voltage box 4 may merely be in surface contact with the inner wall of the frame structure, and a sealing member may also be provided therebetween.

In order to further improve the installation stability of the high-voltage box 4, a groove 31 is provided on the flat roof structure 3, and the high-voltage box 4 is arranged in the groove 31. Through the above arrangement, the high-voltage box 4 can have enough height, which is convenient to accommodate the high-voltage apparatus in the high-voltage box 4.

In an embodiment, the groove 31 is a sliding groove arranged on the roof of the train, and the problem of water leakage is effectively solved by embedding the high-voltage box 4 into the groove 31.

The outer wall of the high-voltage box 4 hermetically contacts with a groove side wall of the groove 31. Through the above arrangement, the sealing effect is effectively ensured.

The outer wall of the high-voltage box 4 may merely be in surface contact with the side wall of the groove 31, and the sealing member may also be arranged therebetween.

In order to improve the service life, the flat roof structure 3 is an aluminum alloy structure. Through the above arrangement, the strength and corrosion resistance of the flat roof structure 3 are effectively improved, and the service life is effectively prolonged.

A motor train unit is further provided according to the embodiment of the present application, which includes a pantograph platform structure. The pantograph platform structure is the pantograph platform structure as described above. Since the above pantograph platform structure has the above technical effect, the motor train unit having the above pantograph platform structure also has the same technical effect, which will not be described here.

The above embodiments are described in a progressive manner. Each of the embodiments is mainly focused on describing its differences from other embodiments, and references may be made among these embodiments with respect to the same or similar parts.

The above illustration of the disclosed embodiments can enable those skilled in the art to practice or use the present application. Various modifications to the embodiments are apparent to the person skilled in the art, and the general principle herein can be implemented in other embodiments without departing from the spirit or scope of the present application. Therefore, the present disclosure is not limited to the embodiments described herein, but should be in accordance with the broadest scope consistent with the principle and novel features disclosed herein.

## Claims

1. A pantograph platform structure, comprising:
a train body structure having a sunken flat roof structure (3);
a high-voltage box (4) provided on the flat roof structure (3) and configured to accommodate a high-voltage electrical apparatus, wherein, the high-voltage box (4) is accommodated on the flat roof structure (3), and a top surface contour of the high-voltage box (4) is aligned with a top surface outer contour of the train body structure; and
a pantograph guide guard (1) provided on the flat roof structure (3), wherein, the pantograph guide guard (1) has an avoidance portion for installing a pantograph, the pantograph guide guard (1) is accommodated on the flat roof structure (3), and a top surface contour of the guide guard (1) is aligned with the top surface outer contour of the train body structure.

2. The pantograph platform structure according to claim 1, wherein the high-voltage box (4) is located in the avoidance portion of the pantograph guide guard (1).

3. The pantograph platform structure according to claim 1, wherein, the pantograph guide guard (1) is a frame structure, and the avoidance portion is a hollow portion located in a middle of the frame structure.

4. The pantograph platform structure according to claim 3, wherein the high-voltage box (4) hermetically contacts with an inner wall of the frame structure.

5. The pantograph platform structure according to claim 1, wherein, the flat roof structure (3) is provided with a groove (31); and
the high-voltage box (4) is arranged in the groove (31).

6. The pantograph platform structure according to claim 5, wherein an outer wall of the high-voltage box (4) hermetically contacts with a side wall of the groove (31).

7. The pantograph platform structure according to any one of claims 1 to 6, wherein, the flat roof structure (3) is an aluminum alloy structure.

8. A motor train unit, comprising a pantograph platform structure, wherein the pantograph platform structure is the pantograph platform structure according to any one of claims 1 to 7.
